# DEMANDE DE BREVET EUROPEEN

(11) **EP 2 333 940 A1**
(43) Date de publication de la demande: **15.06.2011**
(21) Numéro de dépôt: 10194278.7
(22) Date de dépôt: 09.12.2010
(51) Int. Cl.: H02K 5/14

(54) **Dispositif protège-balais pour démarreur de véhicule automobile et démarreur**

(30) Priorité: 10.12.2009 FR 0958832
(71) Demandeur: Valeo Equipements Electriques Moteur, 94046 Créteil Cedex (FR)
(72) Inventeur: Gentil, Maximilien, 69003 Lyon (FR); Odin, Laurent, 38460 Chamagnieu (FR); Pays, Wilfried, 38510 Sermerieu (FR)

(57) **Abrégé**

Dans un dispositif porte-balais à deux séries de cages porte-balais disposées de part et d'autre d'une platine support de balais, l'invention propose de protéger deux balais placés en regard l'un de l'autre de chaque côté de la platine support de balais par un même dispositif protège-balais comportant des moyens pour couvrir simultanément la section droite arrière des deux cages porte-balais correspondantes. L'invention s'étend à un démarreur pour véhicule automobile incluant un tel dispositif de protection de ses balais.

## Description

La présente invention se rapporte aux dispositifs de protection pour les balais de démarreurs de véhicules automobiles.

De manière classique, les balais de ces démarreurs sont chacun logés dans une cage porte-balai fixée sur une platine support de balais. Le dispositif porte-balais, qui inclut les balais, cages porte-balais et platine support de balais, est lui-même monté sur l'arbre rotor du démarreur pour coopérer avec un collecteur électrique dudit arbre rotor. De manière connue, les balais sont avantageusement disposés en alternance de polarité sur la platine support de balais, qui se présente généralement sous la forme d'un disque percé en son centre d'un orifice pour le montage sur l'arbre rotor.

Pour les protéger des éventuelles poussières pouvant provoquer des court-circuits, ainsi que pour parfaire leur isolation électrique au regard de la cage de démarreur, reliée à la masse électrique du véhicule, dans laquelle est placée l'ensemble du dispositif porte-balais, chacun des balais est équipé, en sa face arrière la plus proche de ladite cage de démarreur, d'un dispositif protège-balai réalisé dans un matériau électriquement isolant.

S'il est à noter que seuls les balais de polarité positive (c'est-à-dire les balais reliés à la borne positive du dispositif d'alimentation en courant du véhicule - typiquement la batterie -) nécessitent d'être isolés électriquement de la masse électrique du véhicule, un dispositif protège-balai équipe chacun des balais, quelle que soit sa polarité, afin d'apporter une protection efficace contre les poussières et d'augmenter la durée de vie et les performances du démarreur.

Ces dispositifs protège-balais se présentent généralement sous la forme d'une pièce de petite taille dont la forme générale est sensiblement complémentaire en section droite de celle d'une cage porte-balai. Cette pièce, réalisée dans un matériau électriquement isolant, est également couramment appelée "clip pour balai" en raison de son mode de mise en place et de maintien, lequel implique son clipsage sur la face arrière de la cage porte-balai.

Un tel mode de mise en place et de maintien par clipsage présente l'inconvénient d'une automatisation difficile. De tels dispositifs protège-balais sont donc généralement mis en place manuellement, ce qui augmente le coût et la durée de fabrication de l'ensemble du démarreur. De plus, la tenue en place de ces pièces est souvent imparfaite.

Ceci est d'autant plus sensible pour les démarreurs de forte puissance, dans lesquels il est d'usage de superposer deux dispositifs porte-balais pour associer en parallèle les balais qu'ils accueillent. En effet, ces démarreurs comportent un nombre plus élevé de balais, ce qui augmente la durée de l'opération de mise en place des protège-balais. Parmi de tels démarreurs, ceux du type décrit dans le cadre de la demande de brevet français n°0855048 déposée au nom de la Demanderesse, dans lesquels une platine support de balais est placée en sandwich entre deux séries de cages porte-balais réparties en regard l'une de l'autre de chaque côté de cette platine, ont l'avantage de présenter un encombrement réduit en hauteur, mais, en contrepartie, l'opération de mise en place des protège-balais en est rendue plus complexe, et le risque de manque de fiabilité du montage est plus élevé.

La présente invention a pour but de proposer un dispositif protège-balais dont le maintien en place soit fiable, et qui permette de réduire le temps de montage du démarreur correspondant.

Elle trouve son application la plus avantageuse, mais non exclusive, pour les démarreurs du type évoqué ci-dessus, dans lesquels une platine support de balais est prise en sandwich entre deux séries de cages porte-balais réparties en regard l'une de l'autre de chaque côté de cette platine, application dans le cadre de laquelle elle sera plus précisément décrite et illustrée plus loin.

L'invention a ainsi pour objet un dispositif protège-balais qui, selon l'une de ses caractéristiques, comporte des moyens pour se placer simultanément sur la section droite arrière de deux cages porte-balais

disposées de chaque côté d'une platine support de balais d'un dispositif porte-balais.

Selon une autre de ses caractéristiques, le dispositif protège-balais selon l'invention comprend des moyens appropriés pour coopérer avec des moyens complémentaires ménagés sur l'épaisseur périphérique de la platine support de balais. Pour ce faire, le protège-balais selon l'invention peut avantageusement comporter une lumière dans laquelle s'engage un ergot placé sur l'épaisseur périphérique de la platine support de balais. Ainsi, d'une part, l'insertion de cet ergot dans cette lumière constitue à la fois un moyen de guidage pour la mise en place du protège-balais selon l'invention, et, d'autre part, cela sécurise l'assemblage ainsi réalisé. En particulier, un tel type de maintien rend la tenue du protège-balais totalement indépendante du balai lui-même, ce qui réduit fortement, voire supprime les risques de chute du protège-balais en cas de léger mouvement du balai, par exemple résultant du jeu au montage dudit balai dans sa cage porte-balai.

Selon une autre de ses caractéristiques, le protège-balais selon l'invention comporte des moyens élastiques pour prendre en sandwich la platine support de balais du dispositif porte-balais.

Plus précisément, dans son mode de réalisation préféré dans lequel il équipe un dispositif porte-balais dans lequel une platine support de balais est placée en sandwich entre deux séries de cages porte-balais réparties en regard l'une de l'autre de chaque côté de cette platine, le protège-balais selon l'invention comporte avantageusement deux plaquettes dont la largeur est sensiblement égale à celle des balais, aptes à se placer chacune entre la face inférieure de l'un de ces derniers et la platine support de balais. Ces plaquettes sont définies de telle manière que, en complément à l'élasticité naturelle du matériau électriquement isolant qui constitue le protège-balais selon l'invention, leur forme contribue à leur souplesse afin de faciliter l'insertion du protège-balais selon l'invention à l'arrière des balais qu'il protège.

Selon une autre de ses caractéristiques, la face interne du protège-balais selon l'invention, qui se place au plus près de la face arrière des balais qu'il protège, comporte une empreinte dont la forme et les dimensions sont sensiblement complémentaires de la forme et des dimensions de la section droite des cages porte-balais en leur face arrière. Cette empreinte, de forme complexe, assure également, par sa forme, un complément de maintien du balai dans sa cage porte-balai.

L'invention s'étend également à un démarreur pour véhicule automobile du type dans lequel la platine support de balais est prise en sandwich entre deux séries de cages porte-balais réparties en regard l'une de l'autre de chaque côté de cette platine, et dans lequel la rondelle porte-balai porte, en son épaisseur périphérique, un élément saillant apte à coopérer avec un protège-balais tel qu'il vient d'être décrit par insertion dans la lumière que celui-ci comporte.

Plus généralement, elle s'étend également à un démarreur pour véhicule automobile qui comporte une platine support de balais de part et d'autre de laquel se trouvent deux séries de cages porte-balais réparties en regard l'une de l'autre de chaque côté de cette platine support de balais, et dans lequel cette platine support de balais porte, en son épaisseur périphérique, un élément saillant apte à coopérer avec un protège-balais tel qu'il vient d'être décrit par insertion dans la lumière que celui-ci comporte.

D'autres caractéristiques et avantages de l'invention ressortiront plus précisément à la lecture de la description détaillée qui suit de l'un de ses modes de réalisation préférés, description illustrée par :
- les figures 1 et 2, qui sont des vues schématiques en perspective d'un dispositif porte-balais d'un démarreur pour véhicule automobile dans lequel une platine support de balais est prise en sandwich entre deux séries de cages porte-balais réparties en regard l'une de l'autre de chaque côté de cette platine, dispositif porte-balais mettant en oeuvre deux protège-balais selon l'invention,
- la figure 3, qui est une vue schématique en perspective de la face interne d'un protège-balais selon l'invention,
- et la figure 4 qui est une vue schématique en coupe transversale partielle d'un dispositif porte-balais tel que celui représenté à la figure 1.

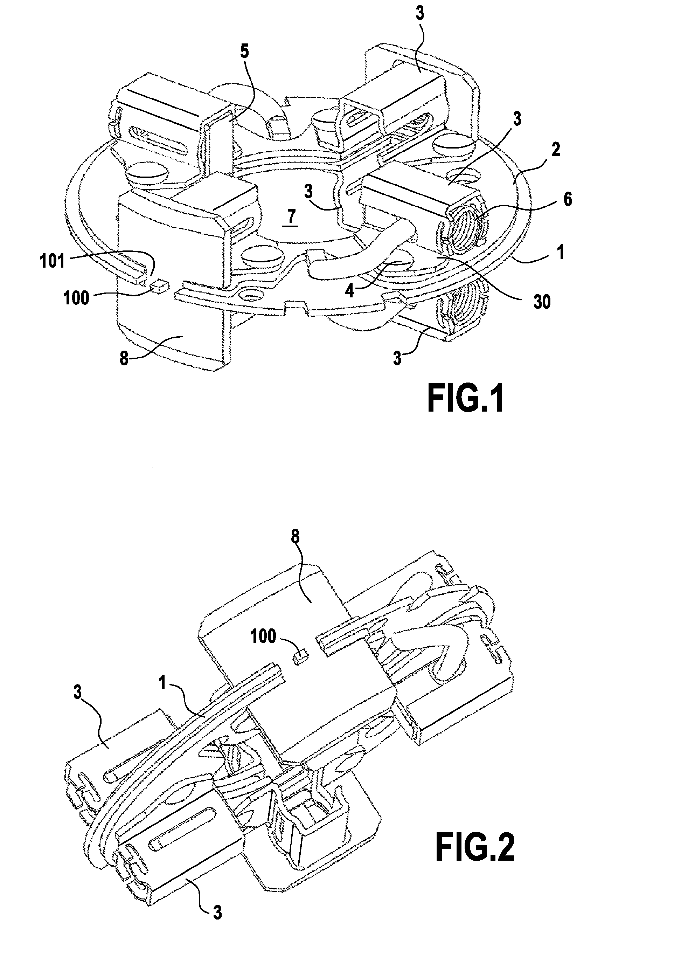

La figure 1 illustre un dispositif support de balais similaire à ceux du type décrit dans la demande de brevet français n°0855048 déposée au nom de la Demanderesse.

Un tel dispositif porte-balais comporte une rondelle 1, métallique, de chaque côté de laquelle sont placées deux rondelles inter-balais 2, isolantes. Les cages porte-balais 3 sont fixées ensemble deux à deux en regard de part et d'autre de la platine formée de la rondelle métallique 1 et des rondelles isolantes 2, ici au moyen de rivets 4 insérée dans des orifices coopérants percés à la fois sur des pattes 30 solidaires des cages porte-balais et dans les rondelles métallique et isolantes 1 et 2. La platine support de balais formée de la rondelle métallique 1 et des rondelles isolantes 2 est ainsi prise en sandwich et maintenue entre les deux séries de cages porte-balais 3.

Chaque balai 5 est inséré dans une cage porte-balai 3, en appui sur un ressort 6 qui, le mettant en compression, assure son maintien à distance fixe de l'orifice central 7 percé dans la rondelle métallique 1 et les rondelles isolantes 2, et destiné au montage du dispositif porte-balais sur un arbre rotor du démarreur. Plus plus de clarté dans la lecture de ce qui suit, on désignera par "avant" les éléments situés à proximité de l'orifice central 7, et par "arrière" les éléments qui en sont éloignés : chaque ressort 6 est ainsi placé en partie arrière de chaque cage porte-balai.

Le dispositif protège-balais 8 selon l'invention, réalisé dans un matériau isolant, se présente sous la forme d'une pièce de forme générale sensiblement parallélépipédique de faible épaisseur, qui comporte deux découpes symétriques 9 qui délimitent, de part et d'autre d'une partie centrale de faible largeur 10, deux plaquettes symétriques 11 dont chacune est apte à couvrir en totalité la section droite arrière d'une cage porte-balai 3.

Une lumière 12 est ménagée sensiblement centralement dans la partie centrale de faible largeur 10 du dispositif protège-balais 8.

Concomitamment, la rondelle métallique 1 du démarreur comporte, en sa partie périphérique située radialement en correspondance avec la face arrière de chacune des cages porte-balais 3, deux découpes 101 qui dégagent un ergot 100 (voir figure 1) apte à être inséré dans ladite lumière 12. La somme des largeurs des deux découpes 101 et de la largeur de l'ergot 100 est sensiblement égale, ou très légèrement supérieure, à celle de la partie centrale 10 du dispositif protège-balais 8. La profondeur des découpes 101 est par ailleurs légèrement supérieure à l'épaisseur du dispositif protège-balais 8, de telle manière que, une fois l'ergot 100 engagé dans la lumière 12 et la partie centrale 10 du dispositif protège-balais engagée dans les découpes 101, le dispositif protège-balais 8 se trouve en retrait par rapport à la périphérie de la rondelle métallique 1, engagé vers l'orifice central 7 de cette dernière. Ainsi le dispositif protège-balais selon l'invention n'augmente pas l'encombrement total de l'ensemble du dispositif porte-balais du démarreur.

Par ailleurs, selon le mode de réalisation illustré par les figures, la hauteur des découpes 9 est légèrement supérieure à la somme des épaisseurs de la rondelle métallique 1 et des rondelles isolantes 2, de desdites découpes, contribuant ainsi à améliorer la tenue mécanique de l'ensemble et à augmenter la fiabilité de la tenue de l'assemblage.

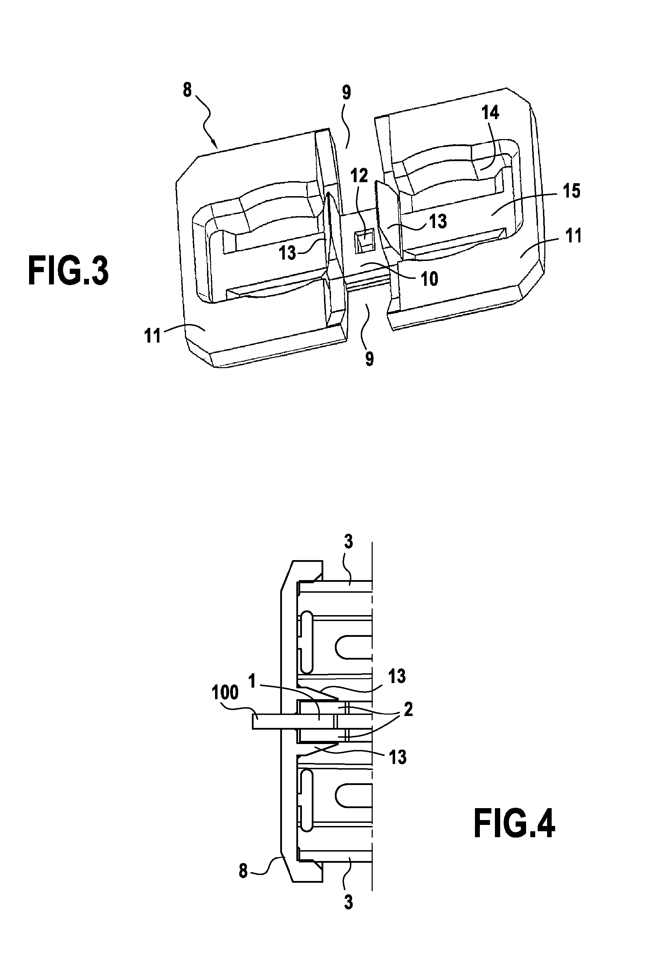

Le dispositif protège-balais 8 comporte par ailleurs (voir figures 2 et 3), deux languettes 13 symétriquement disposées à la base de chacune de ses plaquettes 11, de part et d'autre de sa partie centrale 10. Chacune de ces languettes, dirigée sensiblement perpendiculairement à la face avant des plaquettes 11, présente une section droite amincie vers son extrémité libre, afin de faciliter son insertion, lors de la mise en place du dispositif protège-balais 8, entre la face supérieure de l'une des rondelles isolantes 2 et la face inférieure du balai 5 accueilli dans la cage porte-balai 3 correspondante. Ces languettes contribuent ainsi encore à renforcer la fiabilité du maintien en place du dispositif protège-balais 8.

Chacune des plaquettes 11 du dispositif protège-balais 8, apte à couvrir en totalité la section droite arrière d'une cage porte-balai 3, comporte en outre, en sa face avant, une empreinte 14 (voir figure 2) dont les contours sont complémentaires des contours extérieurs de chacune des cages porte-balai 3. Ainsi, lors de la mise en place du dispositif protège-balais 8, ce dernier est emboîté autour des cages porte-balais 3 qu'il protège, renforçant ainsi encore son maintien en place, ainsi que la protection obtenue.

Au fond de chacune des empreintes 14 est également ménagée une partie légèrement saillante 15 dont la forme générale est sensiblement celle d'un T : cette partie, qui vient au contact de la partie arrière du ressort 6 de maintien du balai 5 dans chaque cage porte-balai 3, renforce également le maintien en place du dispositif protège-balais 8, ainsi que la protection électrique qu'il confère.

En effet, l'isolation électrique apportée par le dispositif protège-balai au balai auquel il est associé est directement reliée à l'épaisseur de ce dispositif. Ici, les empreintes et partie saillante respectivement 14 et 15, ainsi que les languettes 13 et lumière 12 sont définies à la fois pour assurer une mise en place simple et guidée pouvant être réalisée par un automate, et pour conférer au dispositif protège-balais selon l'invention ses performances d'isolation électrique, tout en conservant les propriétés élastiques que lui confère le matériau qui le constitue.

L'invention propose ainsi un dispositif simple, compact, léger, d'une mise en place aisée et automatisable, d'un maintien fiable, et présentant les performances attendues en termes d'isolation électrique pour la protection des balais d'un démarreur pour véhicule automobile notamment de forte puissance dans lesquels deux séries de cages porte-balais sont disposées en regard de part et d'autre d'une platine support de balais d'un dispositif porte-balais de ce démarreur.

Conformé pour accueillir un tel dispositif protège-balais (notamment par la présence des découpes 101 et ergots 100 évoqués plus haut), un tel démarreur s'avère donc, pour un encombrement inchangé au regard des démarreurs existants, plus simple à assembler, et donc moins coûteux. Par ailleurs, plus fiable en termes d'isolation électrique des balais qu'il accueille (par le maintien pus fiable de ses protège-balais), il présente des performances accrues au regard des démarreurs existants.

II est à noter que, dans des démarreurs de forte puissance tels que ceux dans le cadre desquels le dispositif selon l'invention a été plus précisément décrit, et qui font l'objet de la demande n°0855048 déposée au nom de la Demanderesse, les cages porte-balais placées en regard les unes des autres de chaque côté de la platine support de balais constituée de sa rondelle métallique et de ses rondelles isolantes accueillent des balais de même polarité. Selon un mode de réalisation préféré de l'invention, chacune des cages porte-balais du dispositif porte-balais est équipée d'un dispositif protège-balais selon l'invention. Selon des modes de réalisation alternatifs, seules les cages accueillant des balais de polarité positive sont équipées de dispositifs protège-balais tels que décrits dans le présent document, les balais de polartié négative ne nécessitant pas d'être isolés électriquement au regard de la cage du démarreur.

L'invention ne saurait toutefois se limiter aux modes de réalisation spécifiquement décrits dans ce document, et s'étend en particulier à tous moyens équivalents et à toute combinaison techniquement opérante de ces moyens.

## Revendications

1. Dispositif protège-balais pour démarreur de véhicule automobile, **caractérisé en ce qu'**il comporte des moyens (11) pour couvrir simultanément la section droite arrière de première et seconde cages porte-balais (3) d'un dispositif porte-balais dudit démarreur, ledit dispositif porte-balais comprenant des première et seconde séries de cages porte-balais respectivement réparties en regard l'une de l'autre de chaque côté d'une platine support de balais (1, 2) qu'elles prennent en sandwich, chacune desdites cages porte-balais recevant un balai et lesdites première et seconde cages porte-balais (3) appartenant respectivement auxdites première et seconde séries de cages porte-balais et étant disposées en regard l'une de l'autre de chaque côté de ladite platine support de balais (1, 2).

2. Dispositif protège-balais selon la revendication 1, **caractérisé en ce qu'**il comporte des moyens de guidage et de maintien (9, 12) aptes à coopérer avec des moyens complémentaires (100, 101) ménagés sur l'épaisseur périphérique de ladite platine support de balais.

3. Dispositif protège-balais selon l'une ou l'autre des revendications 1 ou 2, **caractérisé en ce qu'**il comporte également des moyens (13) aptes à être insérés entre la face inférieure de chacun des balais accueillis dans les cages porte-balais qu'il protège et la face de ladite platine support de balais sur laquelle est posé ledit balai.

4. Dispositif selon l'une quelconque des revendications 1 à 3, **caractérisé en ce qu'**il comporte deux empreintes (14) dont les contours de chacune sont complémentaires des contours extérieurs des sections droites de la partie arrière des deux cages porte-balais que ledit dispositif couvre simultanément afin de garantir un emboîtement dudit dispositif simultanément autour desdites cages lors de sa mise en place.

5. Démarreur pour véhicule automobile dans lequel deux séries de cages porte-balais sont disposées en regard l'une de l'autre de chaque côté d'une platine support de balais d'un dispositif porte-balai, **caractérisé en ce que** ladite platine support de balais comporte, en sa périphérie, aux positions radiales correspondant aux emplacements desdites cages porte-balais, un ensemble de découpes (101) dégageant un ergot (100) apte à être engagé dans une lumière (12) d'un dispositif protège-balais (8) selon l'une quelconque des revendications 1 à 4 pour assurer le guidage et le maintien en place dudit dispositif protège-balais.

6. Démarreur pour véhicule automobile à deux séries de cages porte-balais respectivement réparties en regard l'une de l'autre de chaque côté d'une platine support de balais qu'elles prennent en sandwich, **caractérisé en ce qu'**il comporte au moins un dispositif protège-balais (8) selon l'une quelconque des revendications 1 à 4, ledit dispositif protège-balais (8) étant constitué d'une pièce sensiblement parallélépipédique dans laquelle sont ménagées deux découpes (9) qui délimitent de part et d'autre d'une partie centrale (10), deux plaquettes symétriques (11) dont chacune est apte à couvrir en totalité la section droite arrière de l'une desdites cages porte-balai.

7. Démarreur selon la revendication 6, **caractérisé en ce qu'**une lumière (12) est ménagée dans ladite partie centrale (10) dudit dispositif protège-balais (8) pour accueillir un ergot (100) ménagé dans l'épaisseur périphérique de ladite platine support de balais, en correspondance radiale avec chacune desdites cages porte-balais qu'elle accueille.

8. Démarreur selon l'une ou l'autre des revendications 6 ou 7, **caractérisé en ce que** chacun desdits dispositifs protège-balais (8) qui protègent les balais qu'il accueille comporte également deux languettes (13) aptes à être chacune insérée entre la face inférieure de l'un des balais protégés et la face de ladite platine support de balais sur laquelle ledit balai est placé.

9. Démarreur selon l'une quelconque des revendications 6 à 8, **caractérisé en ce que** chacun desdits dispositifs protège-balais (8) qui protègent les balais qu'il accueille comporte, en sa face avant, deux empreintes (14) dont les contours sont complémentaires des contours extérieurs de la section droite de chacune des cages porte-balais que ledit dispositif couvre simultanément, pour garantir un emboîtement dudit dispositif protège-balais simultanément sur chacune desdites cages lors de sa mise en place.
